(19) **Europäisches Patentamt**
**European Patent Office**
**Office européen des brevets**

(11) **EP 2 800 723 B1**

(12) **FASCICULE DE BREVET EUROPEEN**

(45) Date de publication et mention de la délivrance du brevet:
**21.11.2018 Bulletin 2018/47**

(51) Int Cl.:
*C21D 1/74* (2006.01)          *C21D 1/76* (2006.01)
*C22F 1/02* (2006.01)          *C23C 8/20* (2006.01)
*C01B 3/32* (2006.01)

(21) Numéro de dépôt: **12823246.9**

(22) Date de dépôt: **13.12.2012**

(86) Numéro de dépôt international:
**PCT/FR2012/052927**

(87) Numéro de publication internationale:
**WO 2013/102714 (11.07.2013 Gazette 2013/28)**

(54) **PROCÉDÉ DE GÉNÉRATION D'UN MÉLANGE DE GAZ CONTENANT DU MONOXYDE DE CARBONE ET DE L'HYDROGÈNE EN PROPORTIONS SENSIBLEMENT ÉGALES**

VERFAHREN ZUR ERZEUGUNG EINER GASMISCHUNG MIT IM WESENTLICHEN GLEICHEN ANTEILEN VON KOHLENMONOXID UND WASSERSTOFF

METHOD FOR GENERATING A MIXTURE OF GAS CONTAINING SUBSTANTIALLY EQUAL PROPORTIONS OF CARBON MONOXIDE AND HYDROGEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.01.2012 FR 1250164**

(43) Date de publication de la demande:
**12.11.2014 Bulletin 2014/46**

(73) Titulaire: **L'Air Liquide Société Anonyme pour l'Etude et l'Exploitation des Procédés Georges Claude 75007 Paris (FR)**

(72) Inventeur: **DOMERGUE, Didier 91120 Palaiseau (FR)**

(74) Mandataire: **Mellul-Bendelac, Sylvie Lisette L'Air Liquide Direction des Services De la Propriété Intellectuelle 75, Quai d'Orsay 75321 Paris Cedex 07 (FR)**

(56) Documents cités:
**WO-A1-2010/066979      FR-A1- 2 450 878
US-A- 4 643 402**

**Description**

La présente invention concerne le domaine des traitements thermiques de pièces métalliques.

Un des objectifs de la présente invention est de proposer un nouveau procédé de fourniture d'une atmosphère à injecter dans des fours destinés au traitement thermique ou thermochimique de pièces métalliques.

FR 2450878 décrit un procédé de production d'une atmosphère destinée au traitement thermique de pièces métalliques dans un four. Le méthanol est mélangé avec l'azote et est décomposé thermiquement à une température entre 700 et 1150°C. Avec cette décomposition un mélange d'une mole de monoxyde de carbone et de deux moles d'hydrogène est formée.

Les atmosphères visées par la présente invention doivent permettre d'une part d'éviter une décarburation et une oxydation des pièces lorsqu'elles sont diluées, et d'autre part être capables d'enrichir les pièces en carbone (procédés de cémentation et de carbonitruration) lorsqu'elles sont non diluées. Enfin une telle atmosphère doit pouvoir être produite dans des conditions économiques, sécurisantes, et être aisée à manipuler.

Les atmosphères de traitement thermique répondant aux critères ci-dessus contiennent généralement comme composants majoritaires de l'azote qui possède un rôle neutre vis a vis des traitements visés ci-dessus, de l'hydrogène qui protège contre l'oxydation, et du monoxyde de carbone qui à la fois protège contre l'oxydation et la décarburation et permet si nécessaire de réaliser un enrichissement en carbone (cémentation). On trouve également dans ces atmosphères des composants minoritaires tels que du $CO_2$ et de l'eau ou encore du méthane. L'atmosphère peut également être enrichie en hydrocarbures (gaz naturel, propane....) afin d'influer sur les équilibres chimiques.

Parmi les méthodes traditionnellement utilisées actuellement pour produire de telles atmosphères on peut citer les méthodes citées ci-dessous, bien connues de l'homme du métier.

Tout d'abord, ces atmosphères peuvent être produites par ce que l'on appelle des « générateurs endothermiques ». Ces générateurs produisent l'atmosphère à partir d'une réaction entre de l'air et un combustible (généralement du gaz naturel), réaction se produisant dans un réacteur catalytique chauffé à une température de l'ordre de 1000°C. Ce type d'atmosphère contient typiquement comme composants majoritaires 40% d'azote (N2), 40% d'hydrogène (H2), et 20% de monoxyde de carbone (CO). Les atmosphères produites par un générateur endothermique sont connues et utilisées depuis de nombreuses années, mais présentent l'inconvénient de nécessiter pour l'utilisateur l'investissement d'une machine de production dédiée. Par ailleurs, l'utilisation d'un générateur endothermique se révèle souvent peu flexible. La capacité de production s'adapte généralement difficilement au besoin réel et il est alors nécessaire de produire en permanence un débit supérieur au débit nécessaire. D'autre part, les teneurs des différents constituants du mélange sont fixées par la réaction se produisant dans le réacteur catalytique : s'il demeure possible de diminuer les teneurs en $H_2$ et CO par dilution à l'azote (procédé dit communément « endo dilué »), il n'est en revanche pas faisable industriellement d'augmenter les teneurs en CO et $H_2$ au-delà de 20% et 40% respectivement. En effet, pour augmenter les teneurs majoritaires il est nécessaire d'augmenter la teneur en oxygène au détriment de l'azote, ce qui pose des problèmes de sécurité et de tenue des matériaux.

Un autre méthode de fabrication bien connue est qualifiée de « in situ », ou « atmosphère de synthèse », par le fait que l'atmosphère est obtenue sans intervention d'un générateur extérieur, mais en procédant à l'injection directe dans le four d'un mélange des différents constituants gazeux nécessaires, ces constituants réagissant entre eux « in situ », dans une zone adaptée en température du four. Parmi ces atmosphères on trouve notamment les mélanges azote/méthanol. Le méthanol est le plus souvent injecté à l'aide d'une canne insérée dans le four de traitement thermique par un tube capillaire à l'aide d'un flux annulaire d'azote gazeux qui pulvérise le méthanol sous forme de fines gouttelettes pour l'entraîner dans le four. Sous l'effet de la température du four qui peut s'élever typiquement à 900°C, la molécule de méthanol craque pour former du CO et $H_2$, selon la réaction suivante:

$$CH_3OH \longrightarrow CO + 2\,H_2.$$

Le mélange formé contient ainsi deux fois plus d'hydrogène que de CO. Les atmosphères formées à partir d'azote et de méthanol permettent donc notamment de synthétiser une atmosphère identique à celle produite par un générateur endothermique. Il est également possible, selon le ratio d'azote et de méthanol, d'obtenir une atmosphère plus riche en $H_2$ et CO. Ces atmosphères vont permettre en particulier de réaliser plus rapidement les traitements de cémentation.

$$n\,CH_3OH + m\,N_2 \rightarrow n\,CO + 2n\,H_2 + m\,N_2$$

Le taux de CO varie alors typiquement entre 10 et 27 % du mélange final.

Il faut signaler qu'en vue de supprimer l'apport d'azote, il a été proposé de craquer au goute à goute du méthanol pur ou en mélange avec d'autres liquides organiques, le taux de CO s'élève alors à 33%, mais cette méthode est peut retenue par l'industrie car elle génère beaucoup de suie et est difficile à contrôler du point de vue de l'enrichissement en carbone.

Pour les traitements de cémentation ou carbonitruration réalisés sous atmosphère gazeuse de type atmosphère de générateur ou atmosphère de synthèse, la rapidité du traitement est liée à la vitesse de transfert de carbone entre l'atmosphère et la surface des pièces ou flux de carbone $\phi_c$, qui peut s'exprimer de la façon suivante :

$$\phi_C = \beta \, (PC - C_S)$$

où

$C_S$ représente la teneur en carbone des pièces traitées, PC représente le potentiel carbone de l'atmosphère défini comme la teneur d'un clinquant en fer exposé à l'atmosphère pendant une durée infinie, $\beta$ est le coefficient de transfert de carbone qui est proportionnel au produit des teneurs en CO et H2.

Le potentiel carbone peut être calculé selon la relation suivante dans l'hypothèse d'une atmosphère à l'équilibre :

$$PC = \frac{100 \cdot CO^2 / CO_2}{19.6 \cdot CO^2 / CO_2 + 1.07 \cdot \exp(4798{,}6 / T)}$$

Le potentiel carbone est donc caractéristique de l'équilibre qui peut se faire entre la pièce et l'atmosphère, et le coefficient $\beta$ caractérise la vitesse à laquelle cet équilibre peut être atteint.

Dans une recherche d'augmentation de productivité, on voit donc l'intérêt qu'il y a à augmenter les teneurs en CO et en $H_2$, afin de maximiser le flux de carbone au travers du potentiel carbone et du coefficient de transfert de carbone $\beta$.

Une atmosphère contenant 50% de CO et 50% d'H2 (donc un ratio 1) permettrait notamment de maximiser le coefficient de transfert de carbone $\beta$.

En effet, si l'azote est généralement utilisé comme gaz de propulsion, il est possible de remplacer celui-ci par du CO pour obtenir un mélange final de CO et H2 proche de 50/50, n et m étant égaux à 1.

$$n \, CH3OH + m \, CO \rightarrow (n + m) \, CO + 2 \, n \, H2$$

Avec n = m = 1

$$CH3OH + CO \rightarrow 2 \, CO + 2 \, H2$$

Toutefois le coût et la difficulté de mise en oeuvre du CO conditionné en bouteille ou en cadre, lié à la très forte toxicité de cette molécule, rendent cette solution peu attractive.

On propose alors dans le cadre de la présente invention un nouveau procédé de fourniture d'une atmosphère de traitement thermique de pièces métalliques. Comme on le verra plus en détails dans ce qui suit, ce procédé peut être résumé ainsi :

- on génère du CO (typiquement sous quelques bars de pression), dans un générateur à partir d'un mélange d'hydrocarbure(s) et de $CO_2$, l'hydrocarbure pouvant être par exemple du $C_2H_2$, du $C_2H_4$, du $C_3H_6$ etc.., ou un mélange de tels gaz.

L'objectif recherché ici est que cet hydrocarbure forme du carbone, pour que ce carbone soit consommé par le $CO_2$ pour former du CO selon les réactions :

$$C_xH_y \rightarrow x \, C + y/2 \, H_2 \qquad (1)$$

et

$$C + CO_2 \rightarrow 2 \, CO \qquad (2)$$

On le sait la température au sein du réacteur est située dans la gamme allant de 650°C à 850°C, une grande surface d'alumine suffit, la réaction de combustion de la suie par le $CO_2$ étant fortement exothermique (175 K joule/môle), l'utilisation de catalyseur n'est pas nécessaire.

Notons que l'utilisation de l'acétylène à titre d'hydrocarbure est intéressante car le cracking est exothermique. Le maintien en température du réacteur en sera d'autant moins gourmand en énergie.

Dans le cas de l'utilisation de l'acétylène, les débits nécessaires pour générer 1 Nm$^3$/h d'atmosphère sont de 0,117 Nm$^3$/h de $C_2H_2$ et de 0,234 Nm$^3$/h de $CO_2$.

- on réalise alors le couplage de ce CO ainsi généré extérieurement, avec du méthanol, en injectant l'ensemble CO/CH$_3$OH dans le four de traitement thermique par exemple selon les techniques bien connues déjà évoquées plus haut, pour réaliser la réaction in-situ traditionnelle.

L'invention concerne alors un procédé de génération d'une atmosphère destinée au traitement thermique de pièces métalliques dans un four, selon lequel on procède à l'introduction, dans au moins une phase du cycle de traitement ou au moins une zone du four de traitement thermique, d'un mélange comportant du CO gazeux et du méthanol sous forme de fines gouttelettes ou de vapeur, de façon à réaliser à l'intérieur du four la réaction entre le CO et le méthanol pour former un mélange d'hydrogène et de CO selon la réaction :

$$CH_3OH + CO \rightarrow 2CO + 2 H2$$

le CO ayant été obtenu en amont de ladite introduction par la réaction entre un hydrocarbure ou un mélange d'hydro-carbures et du $CO_2$ dans un générateur de CO.

L'injection du mélange CO/méthanol est préférentiellement réalisée dans une phase du cycle de traitement ou une zone du four de traitement thermique dont la température est supérieure à 720 °C, et encore plus préférentiellement située dans l'intervalle allant de 750 °C à 1120°C.

Selon un des modes avantageux de mise en oeuvre de l'invention, le gaz CO issu du générateur de CO est refroidi avant son injection dans le four, par échange thermique dans un échangeur de chaleur avec le méthanol avant que celui-ci n'atteigne le four, la dite introduction de fluides comprenant donc l'injection du CO qui a été refroidi et l'injection du méthanol qui a été réchauffé durant l'échange thermique.

En effet, en sortie de réacteur une trempe du gaz permet d'en figer la composition.

On peut néanmoins envisager des solutions moins complexes d'échange, telles qu'un classique refroidissement à l'eau.

On peut également ne pas tremper le gaz en sortie de réacteur et l'injecter directement dans le four via la canne d'injection.

Selon un autre des modes de mise en oeuvre de l'invention, la régulation du potentiel carbone dans le four est réalisée par la prise en compte du ratio d'hydrocarbure et de $CO_2$ injectés dans le générateur de CO.

Ainsi à titre illustratif, si l'on a un générateur par four, le potentiel carbone du four sera avantageusement ajusté par le ratio $CO_2/C_xH_y$ injecté dans le générateur de CO : Si le potentiel est trop élevé on diminue le débit de $C_xH_y$ ou on augmente le débit de $CO_2$, s'il est trop faible on augmente le débit d'hydrocarbure ou on diminue le débit de $CO_2$. Cet ajustement pourrait être fait directement dans le four, mais cela nécessiterait la mise en oeuvre plus lourde d'une panoplie de gaz complémentaires.

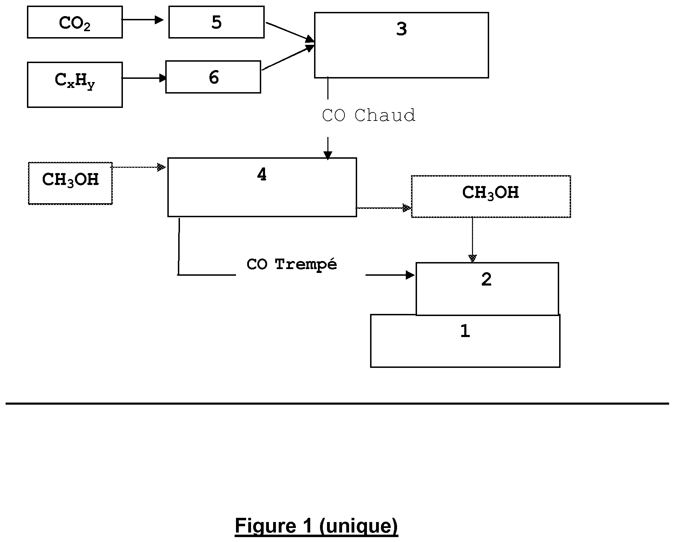

L'invention sera mieux comprise à la lecture de la figure 1 (unique) annexée qui illustre une vue schématique partielle d'une installation d'élaboration d'une atmosphère de traitement thermique conforme à un mode de mise en oeuvre de l'invention, on reconnaît sur cette figure les éléments suivants :

- la référence 1 désigne le four de traitement thermique, que l'on doit alimenter à l'aide de l'atmosphère requise, la référence 2 désigne la canne d'injection, de même type par exemple que celle utilisée classiquement dans les générations in-situ azote/méthanol ;
- on alimente un générateur 3 de CO à l'aide d'une source de $CO_2$ gazeux dont le débit est régulé via l'organe 5 et d'une source d'hydrocarbure gazeux, par exemple de l'acétylène, dont le débit est régulé via l'organe 6 ;
- on récupère donc en sortie de générateur 3 du CO dont la température est typiquement située dans la gamme [700 - 950] °C;
- avant de diriger ce CO vers la canne d'injection du four, on réalise un échange thermique entre ce CO « chaud » et du méthanol, dans l'échangeur 4, pour ramener la température du CO typiquement dans la gamme [100 - 250] °C, tandis que la température du méthanol est élevée dans la même opération jusqu'à typiquement 200 °C.
- et c'est donc ce CO « trempé » et ce méthanol « réchauffé » qui sont dirigés vers la canne d'injection 2.

**Revendications**

1. Procédé de génération d'une atmosphère destinée au traitement thermique de pièces métalliques dans un four (1), selon lequel :

- on alimente un générateur (3) de CO à l'aide d'une source de $CO_2$ gazeux et d'une source d'un hydrocarbure gazeux ou d'un mélange d'hydrocarbures gazeux, pour produire du CO ;

- on procède à l'introduction, dans au moins une phase du cycle de traitement ou au moins une zone du four de traitement thermique, d'un mélange comportant le CO gazeux obtenu dans ledit générateur et du méthanol sous forme de fines gouttelettes ou de vapeur, de façon à former à l'intérieur du four un mélange d'hydrogène et de CO selon :

$$CH_3OH + CO \rightarrow 2CO + 2\,H_2.$$

**2.** Procédé selon la revendication 1, **caractérisé en ce que** ladite introduction est réalisée dans une phase du cycle de traitement ou une zone du four de traitement thermique dont la température est supérieure à 720 °C, et encore plus préférentiellement située dans l'intervalle allant de 750 °C à 1120°C.

**3.** Procédé selon l'une des revendications précédentes, **caractérisé en ce que** le gaz CO issu du générateur de CO est refroidi avant son injection dans le four, par échange thermique dans un échangeur de chaleur (4) avec le méthanol avant que celui-ci n'atteigne le four, la dite introduction de fluides comprenant donc l'injection du CO qui a été refroidi et l'injection du méthanol qui a été réchauffé durant l'échange thermique.

**4.** Procédé selon l'une des revendications précédentes, **caractérisé en ce que** l'on régule le potentiel carbone dans le four par la prise en compte du ratio d'hydrocarbure et de $CO_2$ dans le mélange injecté dans le générateur de CO.

## Patentansprüche

**1.** Verfahren zur Erzeugung einer Atmosphäre, die zur thermischen Behandlung von Metallteilen in einem Ofen (1) bestimmt ist, wobei:

- ein CO-Generator (3) mittels einer Quelle für gasförmiges $CO_2$ und einer Quelle für einen gasförmigen Kohlenwasserstoff oder einem Gemisch von gasförmigen Kohlenwasserstoffen versorgt wird, um CO herzustellen;
- die Einführung eines Gemisches, das das im Generator erhaltene gasförmige CO und Methanol in Form von feinen Tröpfchen oder Dampf umfasst, in mindestens einer Phase des Behandlungszyklus oder in mindestens eine Zone des Wärmebehandlungsofens so durchgeführt wird, dass im Inneren des Ofens ein Gemisch aus Wasserstoff und CO gemäß:

$$\textbf{CH}_3\textbf{OH} + \textbf{CO} \rightarrow \textbf{2CO} + \textbf{2 H}_2$$

gebildet wird.

**2.** Verfahren nach Anspruch 1, **dadurch gekennzeichnet, dass** die Einführung in einer Phase des Behandlungszyklus oder in eine Zone des Wärmebehandlungsofens erfolgt, deren Temperatur mehr als 720 °C beträgt und noch mehr bevorzugt in einem Bereich von 750 °C bis 1120 °C liegt.

**3.** Verfahren nach einem der vorstehenden Ansprüche, **dadurch gekennzeichnet, dass** das aus CO-Generator stammende CO-Gas vor seiner Einleitung in den Ofen durch einen Wärmeaustausch in einem Wärmeaustauscher (4) mit dem Methanol gekühlt wird, bevor dieses den Ofen erreicht, wobei die Einführung der Fluide somit die Einleitung von CO, das gekühlt wurde, und die Einleitung von Methanol, das beim Wärmeaustausch erwärmt wurde, umfasst.

**4.** Verfahren nach einem der vorstehenden Ansprüche, **dadurch gekennzeichnet, dass** der Kohlenstoffpegel im Ofen durch Berücksichtigung des Verhältnisses von Kohlenwasserstoff und $CO_2$ des in den CO-Generator eingeleiteten Gemisches gesteuert wird.

## Claims

**1.** Method for generating an atmosphere intended for the heat treatment of metal parts in a furnace (1), according to which:

- a CO generator (3) is supplied using a gaseous $CO_2$ source and a source of a gaseous hydrocarbon or of a mixture of gaseous hydrocarbons, in order to produce CO;
- in at least one phase of the treatment cycle or at least one zone of the heat treatment furnace, a mixture comprising the gaseous CO obtained in said generator and methanol in the form of fine droplets or vapour are introduced, so as to form inside the furnace a mixture of hydrogen and CO according to:

$$CH_3OH + CO \rightarrow 2CO + 2\,H_2.$$

2. Method according to claim 1, **characterised in that** said introduction is carried out in a phase of the treatment cycle or a zone of the heat treatment furnace of which the temperature is greater than 720 °C, and more preferably within the interval ranging from 750 °C to 1120°C.

3. Method according to one of the preceding claims, **characterised in that** the CO gas coming from the CO generator is cooled before it is injected into the furnace, via heat exchange in a heat exchanger (4) with methanol before the latter reaches the furnace, said introduction of fluids therefore comprising the injection of the CO that was cooled and the injection of the methanol that was heated during the heat exchange.

4. Method according to one of the preceding claims, **characterised in that** the carbon potential is adjusted in the furnace by taking account of the hydrocarbon and $CO_2$ ratio in the mixture injected into the CO generator.

| CO$_2$ | → | 5 | | | |
|---|---|---|---|---|---|

| C$_x$H$_y$ | → | 6 | | 3 | |

CO Chaud

| CH$_3$OH | 4 | CH$_3$OH |
|---|---|---|

CO Trempé

| | 2 |
|---|---|
| | 1 |

**Figure 1 (unique)**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2450878